# EUROPÄISCHE PATENTANMELDUNG

(11) **EP 2 050 979 A2**
(43) Veröffentlichungstag der Anmeldung: **22.04.2009**
(21) Anmeldenummer: 08017610.0
(22) Anmeldetag: 08.10.2008
(51) Int. Cl.: F16D 65/097

(54) **Bremsbelag für eine Scheibenbremse**

(30) Priorität: 18.10.2007 DE 102007049984
(71) Anmelder: KNORR-BREMSE Systeme für Nutzfahrzeuge GmbH, 80809 München (DE)
(72) Erfinder: Salapic, Borislav, 80636 München (DE)
(74) Vertreter: Mattusch, Gundula

(57) **Zusammenfassung**

Ein Bremsbelag für eine Scheibenbremse, insbesondere für ein Nutzfahrzeug, der eine als bogenförmige Blattfeder ausgebildete Belaghaltefeder (5) aufweist, die in zumindest einem Endbereich mit einer Aussparung (8) versehen ist, in der eine zugeordnete Haltelasche (7) einer Belagträgerplatte (3) geführt ist, ist so ausgebildet, dass die Belaghaltefeder (5) durch Umformen der Haltelasche (7) unverlierbar an der Belagträgerplatte (3) gehalten ist.

## Beschreibung

Die Erfindung betrifft einen Bremsbelag für eine Scheibenbremse gemäß dem Oberbegriff des Anspruchs 1.

Ein derartiger Bremsbelag ist aus der DE 40 20 287 A1 bekannt. Die dort gezeigte und beschriebene Konstruktion hat sich in der Praxis bewährt. Dabei ist die zur Bremsbelaghalterung bestimmte Belaghaltefeder so ausgebildet, dass sie einen Griff bildet, durch den die Baueinheit Belaghaltefeder/Bremsbelag beispielsweise zur Montage bzw. Demontage leicht zu handhaben ist.

Zur Festlegung der Belaghaltefeder sind an der Belagträgerplatte, die im übrigen einen Reibbelag trägt, mit Hinterschneidungen versehene Haltelaschen angeformt, die Aussparungen in Form von Langlöchern in der Belaghaltefeder durchtreten, die dabei die Hinterschneidungen hintergreifen, so dass ein Formschluss gebildet ist, durch den die Belaghaltefeder in radialer Richtung befestigt ist und zwar so, dass ein selbsttätiges Lösen in entspannter oder teilentspannter Lage ausgeschlossen ist.

Da die Belaghaltefeder bei Belastung, also bei einem Zusammendrücken gegen die Belagträgerplatte, aus dem mit den Haltelaschen gebildeten Formschluss herausgedrückt wird, ist diese Art der Sicherung ungenügend.

In der Praxis tritt häufig die Situation ein, dass vor einem Einbau des Bremsbelages nach dessen Vormontage bei einem Verpacken und/oder Transportieren zum Einbauort bzw. zur Lagerstelle unbeabsichtigt die Belaghaltefeder so weit zusammengedrückt wird, dass sie sich aus dem Verbund mit der Belagträgerplatte löst. Im günstigsten Fall muss die Belaghaltefeder nachträglich nochmals mit der Belagträgerplatte verbunden werden, was naturgemäß nur mit einem entsprechenden Zeitaufwand zu ermöglichen ist.

Darüber hinaus besteht bei einem Auswechseln des Bremsbelages die Gefahr, dass, da werkzeuglos zu entfernen, die Belaghaltefeder auf eine neue Belagträgerplatte aufgesetzt wird, wodurch die Betriebssicherheit des Bremsbelages insgesamt unter Umständen gefährdet ist.

Der Erfindung liegt die Aufgabe zugrunde, einen Bremsbelag der gattungsgemäßen Art so weiterzuentwickeln, dass er kostengünstiger montierbar ist und seine Betriebsicherheit dauerhaft verbessert wird.

Diese Aufgabe wird durch einen Bremsbelag mit den Merkmalen des Anspruchs 1 gelöst.

Durch diese Ausbildung des Bremsbelages wird erreicht, dass die Belaghaltefeder nach einer Verbindung mit der Belagträgerplatte in jedem Fall gesichert damit verbunden ist.

Ein Entfernen der Belaghaltefeder ist nur durch ein Zerstören der Haltelasche möglich, so dass ein unbeabsichtigtes Lösen, insbesondere durch Fremdeinwirkung, praktisch ausgeschlossen ist.

Naturgemäß ergibt sich dadurch eine wesentliche Verbesserung sowohl hinsichtlich der Funktionssicherheit als auch hinsichtlich der Montage.

Diesbezüglich ist in jedem Fall gewährleistet, dass nach einer erfolgten Vormontage der Belaghaltefeder, d.h. nach deren Anbringen an der Belagträgerplatte, diese Baueinheit Belaghaltefeder/Belagträgerplatte auch während eines Transports erhalten bleibt. Bevorzugt werden die Haltelaschen rechteckig konturiert ausgebildet, also ohne vorgesehene Hinterschneidung. Auf die so vorstehenden Haltelaschen wird die Belaghaltefeder aufgesteckt und anschließend kalt oder warm verformt.

Dies kann durch ein Stauchwerkzeug geschehen, durch das der Kopf der Haltelaschen schirmartig im Sinne eines Nietes deformiert wird, wobei dann das Grundflächenabmaß dieses Kopfes größer ist als das zugeordnete lichte Abmaß der Aussparung.

Prinzipiell ausreichend ist eine Verformung derart, dass zwei sich gegenüberliegende Seiten der jeweiligen Haltelasche den zugeordneten Rand der Aussparung überragen, so dass ein Abnehmen der Belaghaltefeder ohne Zerstörung der Haltelaschen nicht möglich ist.

Da es sich bei Bremsbelägen um Serienteile handelt, die in großen Stückzahlen hergestellt werden, gelten grundsätzliche Forderungen nach einer kostengünstigen Herstellung.

Dem trägt die Erfindung insoweit Rechnung, als sie mit geringem fertigungstechnischem Aufwand realisierbar ist.

So kann die Umformung der Haltelasche mittels eines einfachen Werkzeugs, beispielsweise eines automatischen Hammers vernietet oder verstemmt werden, beispielsweise durch Kaltumformung.

Denkbar ist aber auch, die Haltelaschen induktiv bis auf Schmiedetemperatur zu erwärmen und anschließend umzuformen, wobei die Erwärmung durch das aufgesetzte Werkzeug erfolgen kann.

In jedem Fall ist problemlos eine Automatisierung der entsprechenden Arbeitsgänge möglich.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

### Es zeigen:

- Figur 1: eine mit erfindungsgemäßen Bremsbelägen bestückte Scheibenbremse in einer perspektivischen Ansicht
- Figur 2: einen Bremsbelag, ebenfalls schaubildlich dargestellt
- Figur 3: den Bremsbelag in einer Vorderansicht
- Figur 4: einen Querschnitt durch den Bremsbelag gemäß der Linie A-A in Figur 3
- Figur 5: einen vergrößerten Teilausschnitt des Bremsbelags entsprechend X in Figur 4
- Figur 6: ebenfalls einen Querschnitt durch den Bremsbelag nach der Linie A-A in Figur 3, jedoch nach einer Bearbeitung
- Figur 7: einen vergrößerten Teilausschnitt gemäß Y in Figur 6.

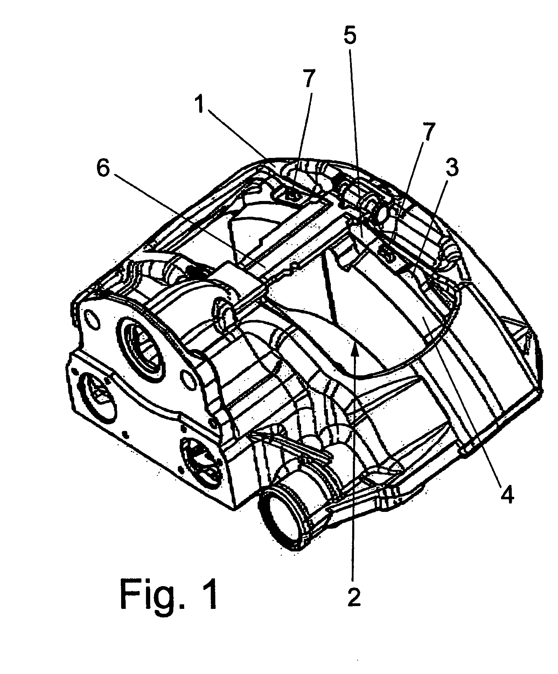

In der Figur 1 ist schematisch eine Scheibenbremse, insbesondere für ein Nutzfahrzeug, dargestellt, die einen Bremssattel 1 aufweist, der eine nicht gezeigte Bremsscheibe übergreift.

In dem Bremssattel 1 sind Bremsbeläge 2 angeordnet, die im Funktionsfall die Bremsscheibe beidseitig kontaktieren.

Jeder Bremsbelag 2 besteht aus einer Belagträgerplatte 3 und einem daran befestigten Reibbelag 4, der an die Bremsscheibe andrückbar ist.

An ihrem, in montierter Stellung oberen Randbereich ist an der Belagträgerplatte 3 eine als bogenförmige Blattfeder ausgebildete Belaghaltefeder 5 befestigt, an der sich ein eine Montageöffnung des Bremssattels 1 überspannender und daran befestigter Haltebügel 6 abstützt, so dass die Belaghaltefeder 5 vorgespannt im Bremssattel 1 einliegt.

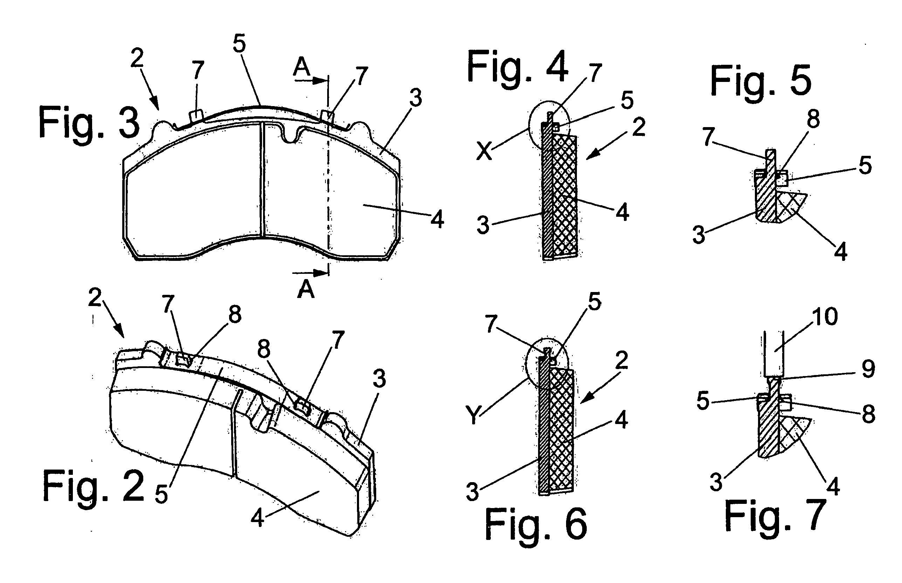

Zur Befestigung der Belaghaltefeder 5 sind an die Belagträgerplatte 3 Haltelaschen 7 angeformt, die besonders deutlich in den Figuren 2 bis 7 erkennbar sind.

Die Belaghaltefeder 5 weist im Überdeckungsbereich mit den Haltelaschen 7 Aussparungen 8 auf, die von den Haltelaschen 7 durchtreten sind. Dies ist insbesondere in den Figuren 2 bis 5 deutlich dargestellt.

Nach einem Aufsetzen der Belaghaltefeder 5 auf die Belagträgerplatte 3, unter Durchtritt der Haltelaschen 7 erfolgt in einem folgenden Arbeitsschritt eine Umformung der Haltelaschen 7, wozu ein Werkzeug 10, beispielsweise ein Druckstempel oder Hammer auf die freie Stirnfläche der jeweiligen Haltelasche 7 gedrückt wird, so dass sich die Haltelasche 7 in diesem Bereich zu einem gestauchten Kopf 9 verformt, dessen Breite größer ist als die zugeordnete lichte Breite der Aussparung 8 (Figur 7).

Durch diese Umformung der Haltelaschen ist die Belaghaltefeder 5 erfindungsgemäß unverlierbar an der Belagträgerplatte 3 gehalten.

### Bezugszeichenliste

- 1: Bremssattel
- 2: Bremsbelag
- 3: Belagträgerplatte
- 4: Reibbelag
- 5: Belaghaltefeder
- 6: Haltebügel
- 7: Haltelasche
- 8: Aussparung
- 9: Kopf
- 10: Werkzeug

## Patentansprüche

1. Bremsbelag für eine Scheibenbremse, insbesondere für ein Nutzfahrzeug, der eine als bogenförmige Blattfeder ausgebildete Belaghaltefeder (5) aufweist, die in zumindest einem Endbereich mit einer Aussparung (8) versehen ist, in der eine zugeordnete Haltelasche (7) einer Belagträgerplatte (3) geführt ist, **dadurch gekennzeichnet, dass** die Belaghaltefeder (5) durch Umformen der Haltelasche (7) unverlierbar an der Belagträgerplatte (3) gehalten ist.

2. Bremsbelag nach Anspruch 1, **dadurch gekennzeichnet, dass** die Haltelasche (7) an ihrem freien Ende zu einem Kopf (9) gestaucht ist.

3. Bremsbelag nach Anspruch 1 oder 2, **dadurch gekennzeichnet, dass** der Kopf (9) zumindest an zwei sich gegenüberliegenden Seiten in seiner Breite größer ist als die lichte Breite der Aussparung (8).

4. Bremsbelag nach einem der vorhergehenden Ansprüche, **dadurch gekennzeichnet, dass** die Haltelasche (7) durch Kaltverformen umgeformt ist.

5. Bremsbelag nach einem der vorhergehenden Ansprüche, **dadurch gekennzeichnet, dass** die Haltelasche (7) vor einem Umformen vorzugsweise auf Schmiedetemperatur erwärmt ist.

6. Bremsbelag nach einem der vorhergehenden Ansprüche, **dadurch gekennzeichnet, dass** der Kopf (9) der Haltelasche (7) schirmartig gestaucht ist.

7. Bremsbelag nach einem der vorhergehenden Ansprüche, **dadurch gekennzeichnet, dass** zur Warmverformung der Haltelasche (7) diese induktiv erwärmt ist.
